# EUROPEAN PATENT SPECIFICATION

(11) **EP 0 500 872 B1**
(45) Date of publication and mention of the grant of the patent: **04.12.1996**
(21) Application number: 91915878.2
(22) Date of filing: 06.09.1991
(51) Int. Cl.: B60Q 7/00, E01F 9/011

(54) **HAZARD WARNING DEVICE**
NOTFALL-HINWEISGERÄT
DISPOSITIF D'AVERTISSEMENT DE DANGER

(30) Priority: 06.09.1990 US 578299
(43) Date of publication of application: 02.09.1992
(73) Proprietor: Ravzik Ltd., D.N. Halutza 85515 (IL)
(72) Inventor: SAUBOLLE, Malcolm, C., Brampton, Ontario L6Z 4N4 (CA)
(74) Representative: Newby, John Ross
(86) International application number: PCT/CA91/00322
(87) International publication number: WO 92/04206

(56) References cited:
- EP-A- 0 135 756
- US-A- 1 574 908
- US-A- 2 165 562
- US-A- 2 669 705
- US-A- 2 880 405

## Description

This invention relates to hazard warning devices such as are used to protect disabled vehicles on highways, and lamps and beacons for use in other analogous applications. More particularly, the invention relates to a hazard warning or beacon device according to the preamble of claim 1.

A device commonly used for the above purpose is a slow burning red pyrotechnic flare. Such flares have various disadvantages, of which some of the most evident are limited shelf life, susceptibility to damp, the use of highly combustible material, as well as the possibility of accidental burns to the user or the starting of fires if carelessly used. In addition, there is often no means available for supporting such flares in an upright position during use; their visibility may be considerably reduced if, as is usual, they lie flat on the ground. Such a flare can of course be used only once, and is difficult to extinguish once lit.

Another widely used form of hazard warning device is a reflective red triangle, which may be made collapsible and provided with an integral prop. Whilst easy to use, and having an indefinite life, it depends for its effectiveness upon the directional reflection of light transmitted by an approaching vehicle and is thus limited in its usefulness, and angle of effectiveness.

US-A-2669705 describes a signal device having a longitudinal body, light sources and a tripod support. Legs attached to a slidable collar are held in place by the collar and a screw. Retraction of the legs is facilitated by unscrewing the screw, sliding the collar towards the upper end of the device and again screwing the locking screw in position.

EP-A-0135756 describes, in one embodiment, a device of triangular cross section having a pair of telescoping portions and a pair of sliding legs and, in another embodiment, a device in which activation of a normally closed switch is achieved by pulling apart telescoping portions.

The present invention seeks to provide a substitute for the conventional flare which can overcome its disadvantages as outlined above while incorporating some of the advantages of the reflective triangle device, and which can be manufactured cheaply.

Accordingly, the invention consits in a hazard warning beacon device having the characterising features of claim 1.

Preferably, the battery is a long shelf life battery, and the light source comprises an oscillator generating a low frequency, low duty cycle switching waveform, a driving circuit controlled by said oscillator, at least one high brightness light emitting diode and a current limiting resistor in series with the driving circuit, and means to complete a circuit from said battery to said oscillator, said driving circuit, said current limiting resistor, the potential of the battery and the number and type of diodes being such that the current through the at least one diode greatly exceeds the manufacturers' maximum continuous current rating for each diode, whilst maintaining an expected mean time before failure of the diode when operated in the device at a level which substantially exceeds the expected life of the battery when the device is continuously operated.

Embodiments of the invention will now be described by way of example only and with reference to the accompanying drawings, in which:-
Figure 1 is a side elevation of a first embodiment of hazard warning device in its dormant condition prior to deployment;
Figure 2 is a side elation of the device in active condition after deployment;
Figure 3 is a plan view of the device after deployment;
Figure 4 is view of a spoke assembly used in the device, prior to incorporation in the latter;
Figure 5 is a section on the line 5-5 in Figure 1;
Figure 6 is longitudinal section on the 6-6 in Figure 5;
Figure 7 is a schematic diagram of the device.
Figure 8 is a side elevation of a second embodiment of the invention, in deployed condition and partially broken away;
Figure 9 is a longitudinal cross-section of the embodiment of Figure 8, in undeployed condition;
Figures 10, 11 and 12 are transverse sections on the lines 10-10, 11-11 and 12-12, respectively, in Figure 9; and
Figure 13 shows a modified version of a lower retaining ring used in a variant of the second embodiment.

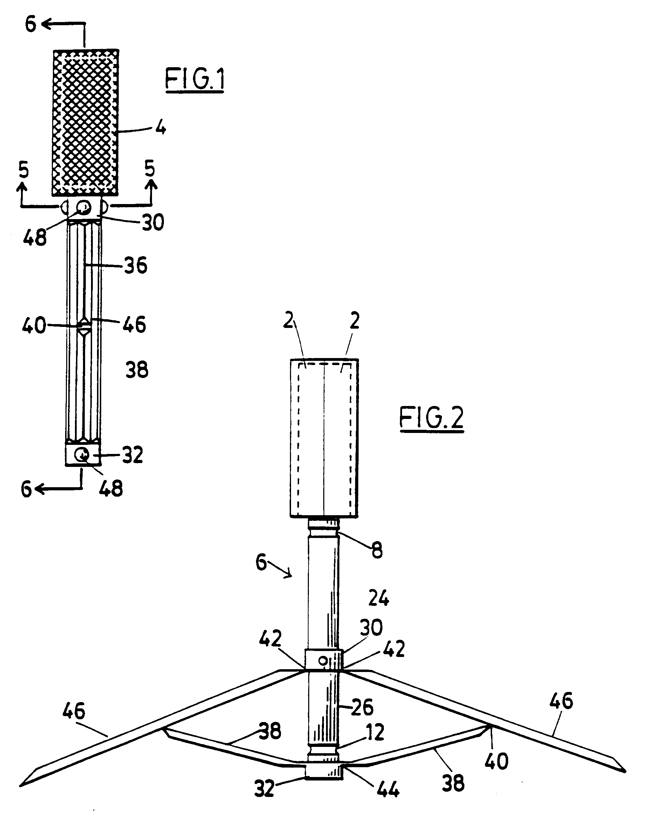

The hazard warning device shown in Figures 1-7 is based upon an elongate cylindrical housing moulded in two identical semicylindrical parts 2 from a clear synthetic plastics material, such as polycarbonate resin, which may optionally be coloured red or amber. The housing has an upper lens portion 4 of increased internal and external diameter as compared to an elongate stem portion 6. The stem portion is formed with three longitudinally spaced external peripheral grooves 8, 10 and 12 which serve as detent positions. The lens portion may be internally configured in known manner so as to enlarge the apparent size of an interior light source. Assembled within the lower portion of the lens portion is a lamp assembly comprising in this example two light emitting diodes LED1 and LED2, a printed circuit board 14 and battery formed of cells B1 and B2. Wires 16 and 18 from the assembly pass down the interior of the stem portion and pass through holes 20 and 22 in one part 2 to its exterior. The two parts 2 are secured together by thin metal sleeves 24 and 26, typically of plated mild steel about 0.2 mm thick, the sleeve 24 being crimped near its upper end into the groove 8 to form a first detent, and at its lower end being crimped into groove 10 so as not to contact the upper end of sleeve 26 which is also crimped into the same groove, forming a second detent. The lower end of sleeve 26 is crimped into the groove 12. The sleeves are connected respectively to the wires 16 and 18.

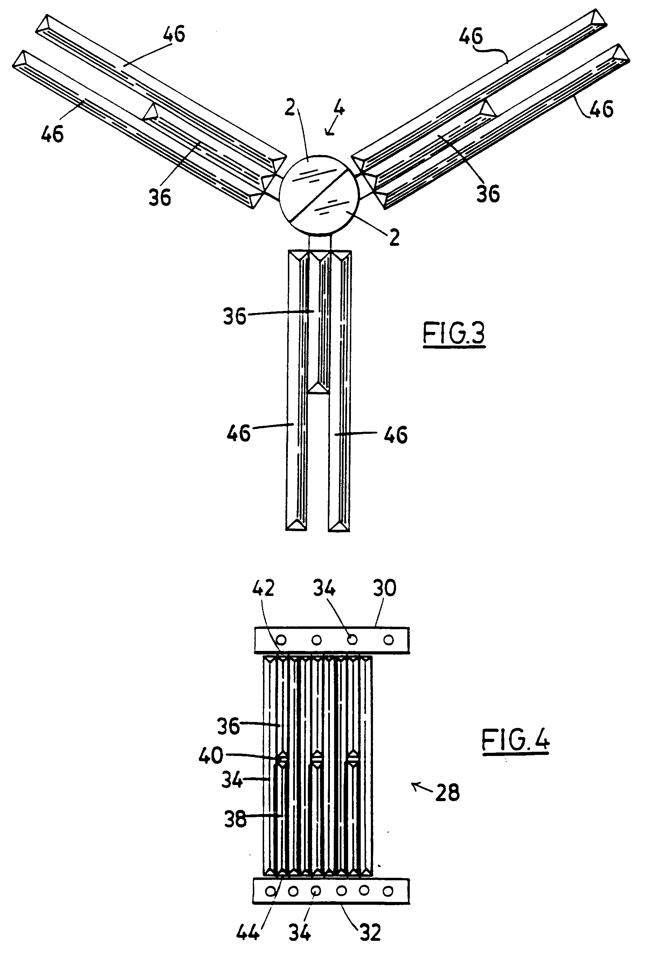

Secured around the sleeves on the stem portion is an assembly 28, best shown in Figure 4, which is moulded from a hinge forming synthetic plastic such as polypropylene. This assembly consists of upper and lower flexible straps 30, 32 formed with perforations 34, and joined by three triangular section struts formed by substantially rigid upper and lower portions 36 and 38 joined to each other and to the straps by thin flexible hinge portions 40, 42 and 44. The upper strut portions 36 are joined to, and the lower portions 38 are flanked by, further substantially rigid struts 46 which are not connected to the straps 30 and 32. In order to provide the desired degrees of flexibility, the straps are much thinner than the struts, and the hinge portions are still thinner.

The upper and lower straps are secured into rings surrounding the stem of the device outside the sleeves 24 and 26, by metallic rivets 48 passing through perforations 48 at opposite ends of the straps, and further rivets 48 may be located in the remaining perforations 34. The inner ends of the rivets in the upper strap are rounded and are releasably detained by the first detent. The rivets securing the lower strap 32 also indent the parts 2 so as to hold the strap against movement.

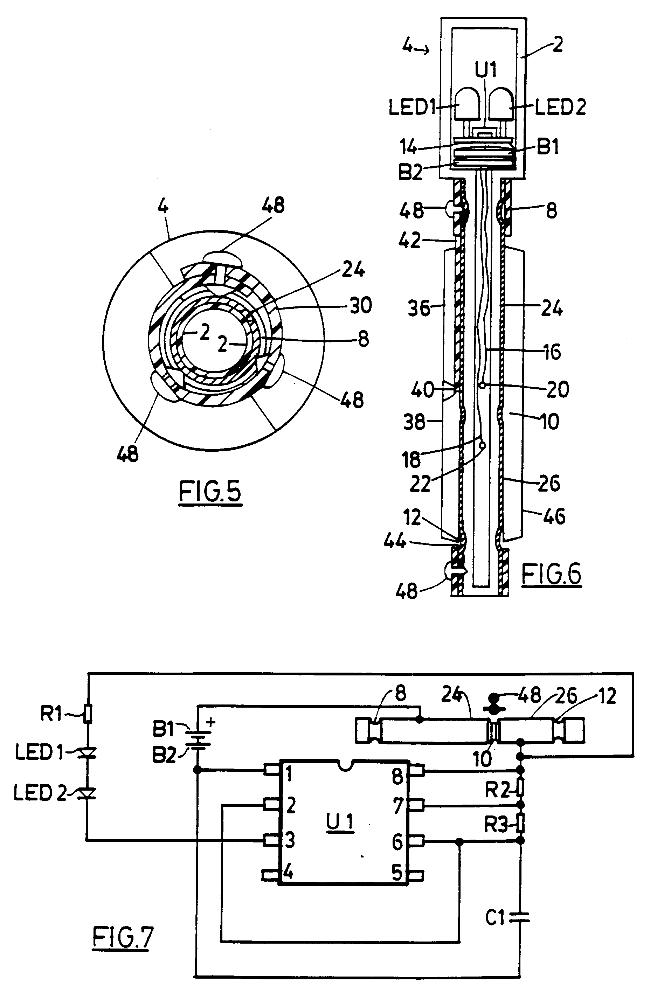

The printed circuit board 14 carries (see Figures 6 and 7) an integrated circuit U1, resistors R1, R2 and R3, capacitor C1, and diodes LED1 and LED2 (see Figure 7). The integrated circuit U1 is an industry standard 555 timer which, in the configuration used, provides an oscillator circuit whose characteristics are determined by external components, and an output circuit for driving an external load. The internal output circuit may be supplemented by an external switching transistor to enhance the switching characteristics and driving capability of the internal circuit. The resistors R2 and R3 together with the capacitor C1 are the external components, selected to provide an oscillator output to the transistor having a one second repetition rate and a 20% duty cycle, whilst the resistor R1 is selected to limit the current through the diodes LED1 and LED2. Since the diodes are required to last only as long as the cells B1 and B2, they may advantageously be substantially over-run so as greatly to increase their light output. The low duty cycle means that the current through the diodes can substantially exceed their rated continuous current. The resistor R1 is selected so that, when operated in the circuit shown, the diodes will still have a mean time before failure substantially in excess of the expected duration for which the batteries can drive the circuit before becoming exhausted, even though they are being operated at instantaneous currents greatly in excess of the maximum specified by the manufacturer of the diode for continuous operation. Thus a diode with a continuous rating of 20 ma can be operated at a current of 100 ma (providing approximately 5 times as much light), or even 300 ma (providing approximately 15 times as much light). Even in the latter case, two small lithium cells can operate the circuit for many hours, well in excess of any conventional flare.

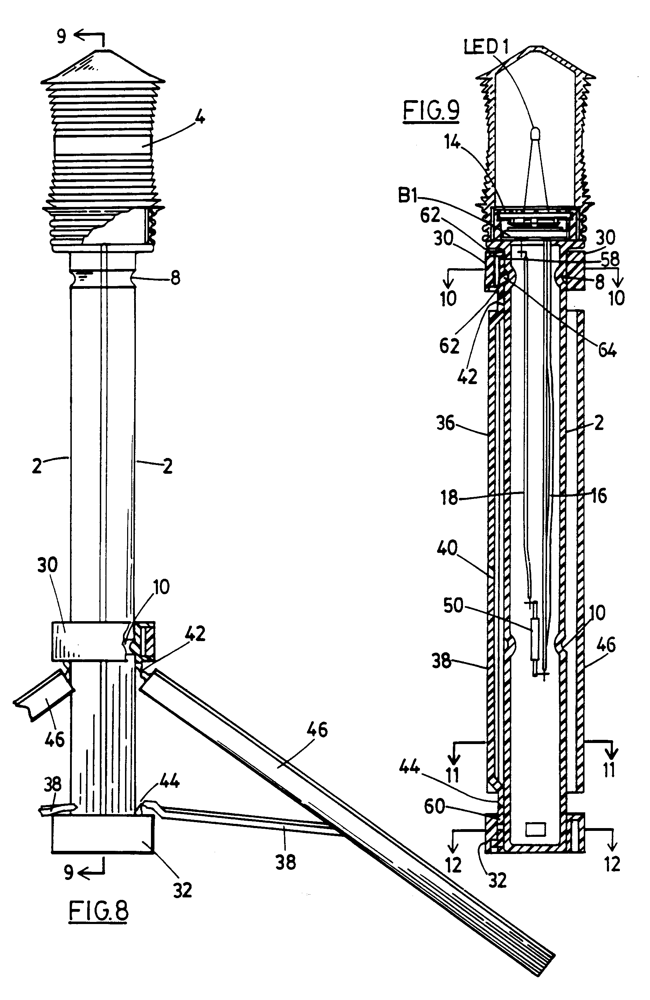

A further embodiment of the invention is described with reference to Figures 8-12, the same reference numerals being utilized where appropriate. The body portions 2 are welded together, and may be made from non-transparent resin such as high-impact polystyrene since the lens portion 4 is molded separately from amber coloured styrene acrylonitrile resin and secured over the end of the body. A single light emitting diode LED1 is supported within the lens portion 4 from a printed circuit board 14 carrying a circuit generally similar to that of the previous embodiment (see Figure 7), which together with a single battery cell B1, in the form of a lithium button cell, is located in a cylindrical recess defined by the top of the body. The wires 16 and 18 from the lamp assembly in this case are connected to a reed switch 50 located in a recess within one of the body portions 2 adjacent the lower one 10 of two external peripheral grooves 8 and 10 moulded in the exterior surface of the body. Use of the switch together with a magnet 52 embedded in the ring 30 enables the metal sleeves of the previous embodiment to be dispensed with and simplifies assembly. The light emitting diode will normally be of the type which radiates red light, but an infra-red emitting diode may be utilized for special applications, and other colours are available.

The integral flexible straps 30 and 32 of the previous embodiment are replaced by separately moulded rings 30 and 32 which retain end portions 58, 60 of the strut portions 36, 38 outward of the hinges 42 and 44 respectively. The ring 32 is secured in place to the bottom ends of the body halves 2 by self-tapping screws 48. The end portions 58 of the strut assemblies have outwardly extending flanges 62 which engage the ring 32 so as to allow an inwardly facing rib 64 on a portion between the flanges to flex out of detenting engagement with the groove 8 as the device is deployed, and then to enter detenting engagement with the groove 10.

In a further modification of the invention, the light emitting diode LED1 is replaced by a high intensity flashlight bulb such as a krypton filled bulb, and the tubular body of the device is used to house, in addition to the reed switch 50, a stack of batteries, for example three alkaline-manganese AAA batteries in place of the lithium button cell B1. As before, the bulb may be over-run since it is operating only intermittently, and its life need only be sufficient to outlast the batteries. No separate current limiting resistor is necessary since current is limited by the internal resistance of the bulb.

In a further modification of this version, the lens portion 4 may be modified by making one side clear and the other side reflective to provide a flare which will also provide more concentrated illumination, to assist for example in changing a vehicle tire.

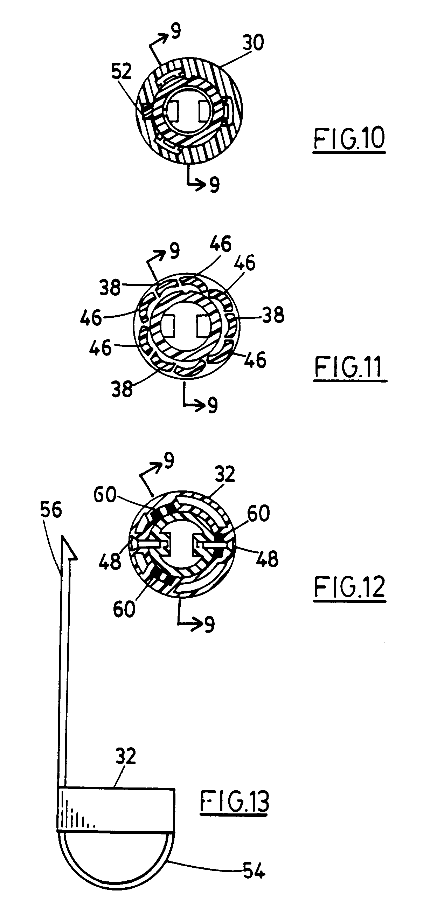

In yet a further modification, the assemblies of the strut portions 36, 38 and the struts 46 are inverted relative to the body so that the struts 46 deploy in umbrella fashion, pivoting about the ring 32. The ring 32 may be modified as shown in Figure 13 to provide a loop 54 for attachment of a tether line, and a clip 56 which allows the ring 30 to move past it during deployment of the device but prevents retraction of the ring.

In order to use the device of Figures 1-7, the strap 30 is pulled downwardly towards the strap 32 so that the inner ends of the rivet or rivets 48 disengage from the first detent in groove 8 and move down over the sleeve 24 until they drop into the second detent formed in groove 10. During this movement the hinges 42 between the strut portions 36 and 38 move outwardly, causing the strut portions 36 to deploy the further struts 46 in umbrella fashion as shown in Figures 2 and 3, thus providing a tripod support for the device. Although the three legs provided by the struts 46 constitute a preferred arrangement because of its simplicity and stability, other multipod arrangements could be used.

As the rivet or rivets 48 engage the groove 10, they establish an electrical connection between the sleeves 24 and 26, and thus between the wires 16 and 18. This completes circuits between the battery formed by cells B1, B2 and the printed circuit board and activates the timer chip, the driver transistor of which supplies low duty cycle pulses of current to the diodes LED1 and LED2 through the current limiting resistor R1. Since the diodes are overdriven, they produce flashes of light at high intensity, providing with the aid of the lens portion 4 a highly visible warning sign. Using two small, readily available 3 volt lithium cells to provide the batteries B1 and B2, and low cost high intensity light emitting diodes for diodes LED1 and LED2, over-driven as discussed above, many hours of continuous operation can be obtained. Typically the diodes can be driven at many times their continuous current rating without exceeding their maximum current rating, and without unduly reducing their MBTF. The use of lithium cells is particularly preferred because of their very long claimed shelf time, often up to 10 years, but other batteries such as alkaline manganese batteries having long shelf life may be acceptable. By long shelf life is meant that the battery when unused will retain a major proportion of its original capacity over an extended period of at least one year and preferably at least three years. Despite the unsuitability of lithium button cells for delivering high currents, they work surprisingly well in the present application because of the intermittent current demand and low duty cycle.

When the hazard warning is no longer required, it may be turned off and the device restored to its folded condition by pulling the strap 30 back to its original position. Provided that sufficient battery life remains, it may then be stored for further use.

The second embodiment functions similarly except that the reed switch 50 is magnetically operated by the magnet 52 in ring 30.

Whilst a red or amber light emitting diode is best for hazard warning applications, an infra-red diode may be used in military or surveillance applications in conjunction with infra-red night vision goggles.

The embodiment in which the struts pivot about ring 30 during deployment is intended for marine applications. If thrown in the water, the air space within the lens 4 will provide the necessary buoyancy to float the unit upright, whilst the struts form a multipod support or fender to stabilize the unit and keep it floating clear of obstacles such as boat hulls.

It should be appreciated that a flashing hazard warning light arrangement electrically similar to that described may be incorporated into hazard warning devices of other physical structures; for example, the LEDs may be arranged to illuminate from a shallow angle lenses of a reflective triangle as mentioned above, the lenses being arranged in a Fresnel type arrangement so as to direct the light from the LEDs substantially perpendicularly outwardly from the surface of the triangle. If two LEDs are used they may be spaced energised alternately so as to illuminate different portions of the triangle. Likewise, the physical structure of the device described could be utilized in conjunction with alternative forms of flashing or steady light source to form a free standing lamp or beacon.

## Claims

1. A hazard warning or beacon device comprising an elongated tubular vertical body (2), a light source at an upper end of the body, a battery (B1, B2) within the body (2), said light source comprising light producing means (LED1, LED2) in an electrical circuit with the battery (B1, B2), first and second rings (30, 32) spaced apart on the body, at least said first ring (30) being movable longitudinally of the body (2) between longitudinally spaced first and second positions (8, 10), an assembly of struts (36, 38, 46) connected to the said first ring (30) for deployment between a first condition in which the struts are folded parallel to and adjacent with the body (2) and a deployed second condition in which the struts form a multipod support for the device as said first ring (30) is moved from said first (8) to said second position (10), characterised in that each of said struts includes an upper strut portion (36) coupled by a thin flexible hinge portion (42) to said first ring (30) and a lower strut portion (38) coupled by a thin flexible hinge portion to said second ring (32), and in that said device further comprises two spaced apart substantially rigid struts (46) flanking, and joined to, each upper strut portion (36) and means (24, 26, 48 or 50) responsive to said first ring (30) entering said second position (10) to complete said circuit with the battery (B1, B2).

2. A device according to claim 1, characterised in that the ring responsive means comprises longitudinally spaced metallic sleeves (24, 26) on said body, and at least one metallic rivet (48) on said first ring (30) which completes a circuit between the sleeves when said ring is in said second position (10).

3. A device according to claim 1, characterised in that the ring responsive means comprises a reed switch (50), and said first ring (30) carries a magnet (52).

4. A device according to claim 1, characterised in that the strut assembly (36, 38, 46) is moulded in one piece from a hinge-forming synthetic plastic, with struts (36, 38, 46) arranged parallel with one another between end portions (58, 60) retained by the rings (30, 32), the struts and end portions being mutually connected by hinge forming portions (40, 43, 44) of reduced thickness.

5. A device according to any one of the preceding claims, characterised in that the battery is a long shelf life battery (B1), and the light source comprises an oscillator (U1) generating a low frequency, low duty cycle switching waveform, a driving circuit (U1, pin 3) controlled by said oscillator, at least one high brightness light emitting device (LED1) and a current limiting resistor (R1) in series with the driving circuit, and means (24, 26, 48) to complete a circuit, from said battery to said oscillator, said driving circuit, said current limiting resistor, the potential of the battery (B1) and the number and type of light emitting devices being selected such that the current through the at least one light emitting device (LED1) greatly exceeds the manfacturer's maximum continuous current rating for each light emitting device, whilst maintaining an expected mean time before failure of the light emitting device when operated in the hazard warning device at a level which substantially exceeds the expected life of the battery when the hazard warning device is continuously operated.

6. A hazard warning device according to claim 5, characterised in that the light emitting device (LED1) is a light emitting diode.

7. A hazard warning device according to claim 5, characterised in that the light emitting device (LED1) is an infra-red light emitting diode.

8. A hazard warning device according to claim 5, 6 or 7, characterised in that the battery (B1) comprises a button lithium cell.

## Patentansprüche

1. Gefahrenwarn- oder Leuchtfeuervorrichtung, die folgendes aufweist: einen langen, röhrenförmigen, vertikalen Körper (2), eine Lichtquelle an einem oberen Ende des Körpers, eine Batterie (B1, B2) innerhalb des Körpers (2), wobei die Lichtquelle lichterzeugende Mittel (LED1, LED2) in einem elektrischen Stromkreis mit der Batterie (B1, B2) aufweist, einen ersten und einen zweiten auf dem Körper beabstandeten Ring (30, 32), wobei wenigsten der erste Ring (30) längs des Körpers (2) zwischen einer ersten und einer zweiten in Längsrichtung voneinander beabstandeten Position (8, 10) bewegbar ist, eine Anordnung von Streben (36, 38, 46), die mit dem ersten Ring (30) verbunden sind zum Entfalten zwischen einem ersten Zustand, in dem die Streben parallel zu dem Körper (2) gefaltet sind und an ihm anliegen, und einem entfalteten zweiten Zustand, in dem die Streben eine mehrfüßige Halterung für die Vorrichtung bilden, wenn der erste Ring (30) von der ersten (8) in die zweite Position (10) veschoben wird, dadurch gekennzeichnet, daß jede der Streben einen oberen Strebenteil (36), der mittels eines dünnen, flexiblen Scharnierteils (42) an den ersten Ring (30) angekoppelt ist, sowie einen unteren Strebenteil (38) umfaßt, der mittels eines dünnen, flexiblen Scharnierteils an den zweiten Ring (32) angekoppelt ist, sowie dadurch, daß diese Vorrichtung außerdem zwei von einander beabstandete, im wesentlichen feste Streben (46), die jedes obere Strebenteil (36) flankieren und damit verbunden sind, sowie Mittel (24, 26, 48 oder 50) aufweist, die darauf ansprechen, daß der erste Ring (30) die zweite Position (10) einnimmt, um den Stromkreis mit der Batterie (B1, B2) zu schließen.

2. Vorrichtung nach Anspruch 1, dadurch gekennzeichnet, daß das auf den Ring ansprechende Mittel auf dem Körper längs voneinander beabstandete metallische Hülsen (24, 26) sowie wenigstens eine metallische Niete (48) auf dem ersten Ring (30) aufweist, die einen Stromkreis zwischen den Buchsen schließt, wenn der Ring sich in der zweiten Position (10) befindet.

3. Vorrichtung nach Anspruch 1, dadurch gekennzeichnet, daß das auf den Ring ansprechende Mittel einen Blattfederschalter (50) aufweist und der erste Ring (30) einen Magneten (52) trägt.

4. Vorrichtung nach Anspruch 1, dadurch gekennzeichnet, daß die Stützenanordnung (36, 38, 46) einstückig aus einem ein Scharnier bildenden Kunststoff geformt ist, wobei die Streben (36, 38, 46) parallel zueinander zwischen Endteilen (58, 60) angeordnet sind, die von den Ringen (30, 32) festgehalten werden, wobei die Streben und die Endteile gegenseitig durch Scharniere bildende Teile (40, 42, 44) verminderter Dicke verbunden sind.

5. Vorrichtung nach einem der vorhergehenden Ansprüche, dadurch gekennzeichnet, daß die Batterie eine Batterie (B1) mit langer Standzeit ist und die Lichtquelle folgendes umfaßt: einen Oszillator (U1), der eine niederfrequente Schaltwellenform mit kurzer Einschaltdauer erzeugt, eine Ansteuerschaltung (U1, Kontakt 3), die durch den Oszillator gesteuert wird, wenigstens eine lichtemittierende Vorrichtung (LED1) großer Helligkeit sowie einen Strombegrenzungswiderstand (R1) in Reihe mit der Ansteuerschaltung sowie Mittel (24, 26, 48), um einen Stromkreis zwischen der Batterie und dem Oszillator zu schließen, wobei die Ansteuerschaltung, der Strombegrenzungswiderstand, die Spannung der Batterie (B1) sowie Anzahl und Typ der lichtemittierenden Vorrichtungen derart ausgewählt sind, daß der Strom durch die wenigstens eine lichtemittierende Vorrichtung (LED1) die Herstellerangaben zum maximalen Dauerstrom jeder lichtemittierenden Vorrichtung deutlich überschreitet, während eine erwartete mittlere Zeit bis zum Ausfall der lichtemittierenden Vorrichtung eingehalten wird, wenn diese in der Gefahrenwarnvorrichtung auf einem Pegel betrieben wird, der die Lebensdauer der Batterie deutlich überschreitet, die erwartet wird, wenn die Gefahrenwarnvorrichtung kontinuierlich betrieben wird.

6. Gefahrenwarnvorrichtung nach Anspruch 5, dadurch gekennzeichnet, daß die lichtemittierende Vorrichtung (LED1) eine lichtemittierende Diode ist.

7. Gefahrenwarnvorrichtung nach Anspruch 5, dadurch gekennzeichnet, daß die lichtemittierende Vorrichtung (LED1) eine infrarotemittierende Diode ist.

8. Gefahrenwarnvorrichtung nach Anspruch 5, 6 oder 7, dadurch gekennzeichnet, daß die Batterie (B1) eine Lithium-Knopfzelle umfaßt.

## Revendications

1. Dispositif d'avertissement de danger ou de balise comprenant un corps (2) vertical tubulaire allongé, une source de lumière à une extrémité supérieure du corps, une pile (B1, B2) à l'intérieur du corps (2), ladite source de lumière comprenant des moyens de production de lumière (LED1, LED2) dans un circuit électrique avec la pile (B1, B2), des premier et second anneaux (30, 32) espacés sur le corps, au moins ledit premier anneau (30) étant mobile dans le sens de la longueur du corps (2) entre des première et seconde positions (8, 10) espacées longitudinalement, un assemblage de montants (36, 38, 46) raccordés audit premier anneau (30) destiné à être déployé entre une première condition dans laquelle les montants sont repliés de manière parallèle et adjacente au corps (2) et une seconde condition déployée dans laquelle les montants forment un support à pieds multiples pour le dispositif quand ledit premier anneau (30) est déplacé de ladite première (8) à ladite seconde position (10), caractérisé en ce que chacun desdits montants comporte une portion de montant supérieure (36) couplée par une mince portion d'articulation souple (42) audit premier anneau (30) et une portion de montant inférieure (38) couplée par une mince portion d'articulation souple audit second anneau (32), et en ce que ledit dispositif comprend en outre deux montants rigides espacés substantiellement (46) flanquant chaque portion de montant supérieure (36) et liés à celle-ci, et des moyens (24, 26, 48 ou 50) sensibles audit premier anneau (30) au moment où il prend ladite seconde position (10) pour fermer ledit circuit avec la pile (B1, B2).

2. Dispositif selon la revendication 1, caractérisé en ce que les moyens sensibles à l'anneau comprennent des manchons métalliques (24, 26) espacés longitudinalement sur ledit corps, et au moins un rivet métallique (48) sur ledit premier anneau (30) qui ferme un circuit entre les manchons lorsque ledit anneau est dans ladite seconde position (10).

3. Dispositif selon la revendication 1, caractérisé en ce que les moyens sensibles à l'anneau comprennent un interrupteur à tiges (50), et ledit premier anneau (30) porte un aimant (52).

4. Dispositif selon la revendication 1, caractérisé en ce que l'assemblage de montants (36, 38, 46) est moulé en une pièce à partir d'une matière plastique synthétique formant une articulation, avec les montants (36, 38, 46) arrangés parallèlement les uns aux autres entre des portions d'extrémité (58, 60) retenues par les anneaux (30, 32), les montants et les portions d'extrémité étant raccordés mutuellement par des portions (40, 43, 44) d'épaisseur réduite formant une articulation.

5. Dispositif selon l'une quelconque des revendications précédentes, caractérisé en ce que la pile est une pile à longue durée de conservation (B1), et la source de lumière comprend un oscillateur (U1) générant un train d'impulsions à faible rapport cyclique et à basse fréquence, un circuit d'attaque (U1, broche 3) commandé par ledit oscillateur, au moins un dispositif d'émission de lumière de grande intensité (LED1) et une résistance de limitation de courant (R1) en série avec le circuit d'attaque et des moyens (24, 26, 48) pour fermer un circuit, de ladite pile audit oscillateur, audit circuit d'attaque, à ladite résistance de limitation de courant, la tension de la pile (B1) et le nombre et le type de dispositifs d'émission de lumière étant choisis de sorte que le courant à travers ledit au moins un dispositif d'émission de lumière (LED1) dépasse largement l'intensité nominale continue maximale du fabricant pour chaque dispositif d'émission de lumière, tout en maintenant un temps moyen estimé entre pannes du dispositif d'émission de lumière, lorsqu'il fonctionne dans le dispositif d'avertissement de danger, à un niveau qui dépasse substantiellement la durée de vie estimée de la pile lorsque le dispositif d'avertissement de danger fonctionne de manière continue.

6. Dispositif d'avertissement de danger selon la revendication 5, caractérisé en ce que le dispositif d'émission de lumière (LED1) est une diode lumineuse.

7. Dispositif d'avertissement de danger selon la revendication 5, caractérisé en ce que le dispositif d'émission de lumière (LED1) est une diode lumineuse infrarouge.

8. Dispositif d'avertissement de danger selon la revendication 5, 6 ou 7, caractérisé en ce que la pile (B1) comprend une pile bouton au lithium.
